# EUROPÄISCHE PATENTSCHRIFT

(11) **EP 0 694 759 B1**
(45) Veröffentlichungstag und Bekanntmachung des Hinweises auf die Patenterteilung: **21.06.2000**
(21) Anmeldenummer: 95111568.2
(22) Anmeldetag: 22.07.1995
(51) Int. Cl.: G01C 19/28

(54) **Vorrichtung zur Bestimmung des Kurswinkels eines Fahrzeuges**
Device for determining the heading of a vehicle
Dispositif pour determiner le cap d'un véhicule

(30) Priorität: 26.07.1994 DE 4426293
(43) Veröffentlichungstag der Anmeldung: 31.01.1996
(73) Patentinhaber: Raytheon Marine GmbH, 24106 Kiel (DE)
(72) Erfinder: Hoffmann, Heino, D-24146 Kiel (DE); Skerka, Wolfgang, D-24768 Rendsburg (DE); Bey, Ulf, D-24625 Grossharrie (DE)
(74) Vertreter: Baumann, Eduard, Dipl.-Phys.

(56) Entgegenhaltungen:
- EP-A- 0 207 907
- EP-A- 0 336 795
- EP-A- 0 485 264
- DE-A- 3 308 358
- US-A- 4 375 726

## Beschreibung

Die Erfindung bezieht sich auf eine Vorrichtung zur Bestimmung des Kurswinkels eines Fahrzeuges, vorzugsweise eines Schiffes, gemäß dem Oberbegriff des Anspruches 1.

Kreiselgeräte sind seit langer Zeit Stand der Technik. In dem Buch "Kreiselgeräte" von dem Autor Wolf von Fabeck, Vogel-Verlag Würzburg, (1980) sind die theoretischen Grundlagen sowie die einzelnen Kreiselsysteme sehr gut beschrieben, insbesondere auf den Seiten 255-318.

Ein Problem bei Kreiselgeräten ist die Datengewinnung im Kreiselsystem. Im Normalfall hat man eine Sensorgruppe mit rotierendem Kreisel, welche mittels einer Brückenschaltung abgetastet wird. Dabei wird die Abtastbaugruppe bei Kursänderungen durch z.B. einen Schrittmotor dem Kreiselsystem nachgeführt. Dieser Winkelwert wird dann in der Regel an Peripheriegeräte übertragen, welche geeignete Mittel zur Kursdarstellung und -ausgabe besitzen. Entsprechende Kreiselgeräte sind aus der DE-C 14 73 891 und DE-C 30 11 727 bekannt.

Aus der DE-A 3308358 ist ein Kreiselgerät gemäß dem Oberbegriff des Anspruches 1 bekannt. Hier ist eine Absolut-Kursbestimmung von Fahrzeugen mittels eines Kreiselkompasses beschrieben. Der Absolutwinkel wird über einen auf dem Kugelschwimmer aufgebrachten Strichcode, der bei einer Kursänderung seine Lage verändert, und eine optische Abtastung ausgelesen. Es ist eine elektro-optische Absolutwinkelauslesung vorgesehen, weiterhin eine elektronische Auswertung, welche die verschiedenen Kursdaten parallel von den Ausleseeinheiten erhält. Die momentane horizontale Winkellage wird bestimmt, desgleichen eine Datenübermittlung der Absolutwinkelwerte auf Kreiselperipheriegeräte. Es ist eine digitale oder analoge Kursanzeige vorgesehen. Verschiedene optische Sensoreinrichtungen zur Erfassung der Drehung des Kugelschwimmers sind vorgesehen. Weiterhin ist ein Gray-Code zur Absolutwinkelbestimmung vorgesehen. Ein Kreiselabtastsystem ist mit einer Abtasteinrichtung gekoppelt. Das Kreiselabtastsystem ist über ein Gelenk in Form eines Kugelgelenkes drehbar aufgehängt und längs einer Kreisbahn beweglich. Der die Kreiselabtasteinheit tragende Kompaßkessel kann bei einer Fahrzeugbewegung mittels eines Nachführmotors dem sich drehenden Kreiselsystem nachgeführt werden. An der abtastenden Einrichtung ist eine abtastbare Einrichtung vorgesehen.

Der Erfindung liegt die Aufgabe zugrunde, eine Vorrichtung zur Bestimmung des Kurswinkels eines Fahrzeuges gemäß dem Oberbegriff des Anspruches 1 so auszugestalten, daß in einfacher Weise eine genaue Ermittlung von digitalen Absolutwinkel-Informationen ermöglicht wird.

Die Aufgabe wird erfindungsgemäß durch die Merkmale des Anspruches 1 gelöst. Weitere Ausgestaltungen der Erfindung sind in den Merkmalen der abhängigen Ansprüche unter Schutz gestellt.

Erfindungsgemäß ist der Nachführkreis mit einer Codierscheibe gekoppelt, die durch eine elektro-optische, eine elektro-magnetische, eine induktive oder eine kapazitive Ausleseeinrichtung zur Feststellung des Absolut-Kurswinkels abtastbar ist.

Das Kreiselgerät kann an einem Universalgelenk aufgehängt sein und einen Schwimmer enthalten, von der gegenüber dem Schwimmer um eine Hochachse um 360° drehbaren Hülle umgeben sein kann.

Es kann ein nach oben durch die Mitte einer Antriebsscheibe hindurchgehende Achse in Form eines Verlängerungsrohres vorgesehen sein, an deren oberen Ende eine horizontale Codierscheibe angebracht sein kann. Diese kann mit dem Nachführkreis verbunden und somit mit diesem mitgedreht werden.

Weiterhin kann eine serielle oder parallele Übertragungseinrichtung für die ermittelten und ausgewerteten Absolutwinkel an andere Geräte, eine Rückmelde-Einrichtung für die übermittelten Daten, eine zusätzliche Einrichtung zur Ermittlung des Horizontwinkels des Fahrzeuges vorgesehen werden. Die Codierscheibe kann einen sogenannten Gray-Code tragen. Die Kreisel-Abtasteinrichtung kann über eine als biegsame Welle arbeitende Einrichtung direkt mit der drehbaren abtastbaren Einrichtung gekoppelt werden. Im Kreisel-Abtastsystem kann eine Brückenschaltung enthalten sein, die bei Relativbewegungen zwischen Kreiselsystem und Hülle ein Ausgangssignal erzeugt, das beim Nachführen durch den Nachführkreis auf Null reduzierbar ist. Die Signale aus der abtastenden Sensoreinrichtung sollen absolute digitale Winkelinformationen darstellen. Das Kreiselgerät ist vorzugsweise ein Kreiselkompaß. Ein vorgesehener nicht flüchtiger Speicher kann die Daten des Absolutwinkelgebers direkt nach der Auslesung speichern. Als Auslesebaustein kann seitlich am Kreiselgerät ein CCD-Sensor vorgesehen sein.

Durch die erfindungsgemäße Vorrichtung erfolgt die Erfassung der Kreiseldaten direkt über eine Absolutwinkelauswertung. Dabei die Absolutwinkelauswertung elektro-optisch, elektro-magnetisch, induktiv oder kapazitiv erfolgt. Die mit der Absolutwinkelauslesung gewonnenen Daten können dabei seriell oder parallel an andere Geräte übermittelt werden.

Es zeigt
- Figur 1: eine Prinzipskitze eines Kreiselgerätes, bei welcher die Winkelgewinnung nicht direkt an einer Kreiselkugel erfolgt;
- Figur 2: eine Prinzipskizze eines Kreiselgerätes, bei welcher die Winkelgewinnung direkt an einer Kreiselkugel erfolgt (ohne Nachführung); und
- Figur 3: eine Prinzipskizze eines Kreiselgerätes mit Peripheriegeräten.

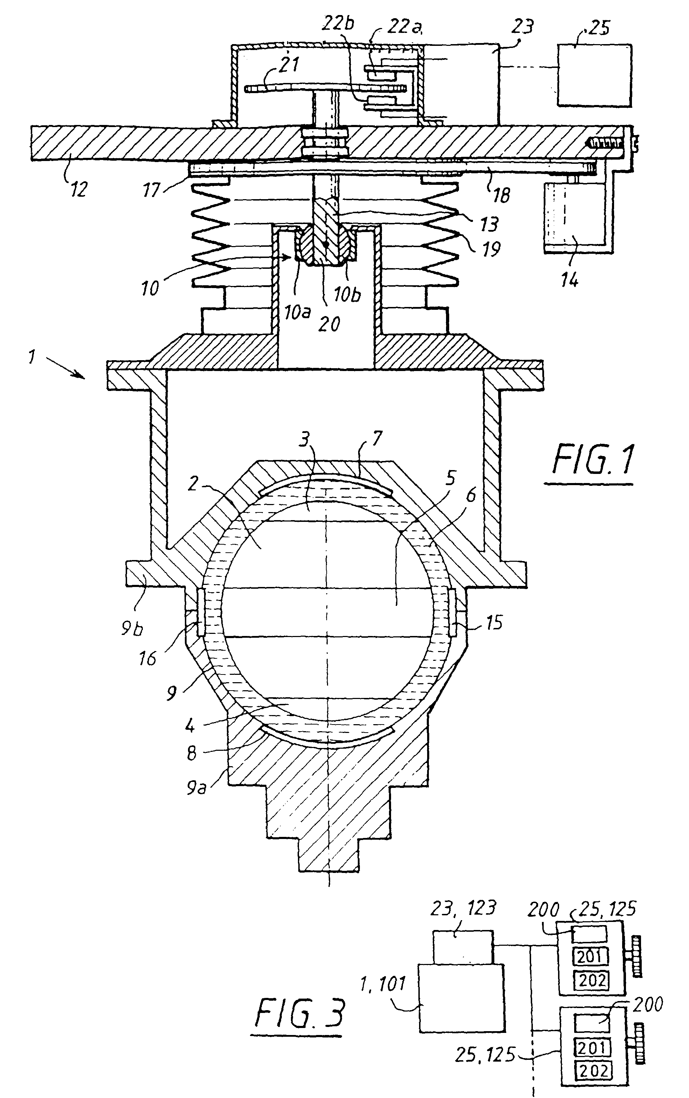

Das in Figur 1 gezeigte Kreiselgerät (1) stellt einen Kompaß dar, dessen kugelförmiger Schwimmer (2) ein nordweisendes Kreiselsystem mit zwei elektrisch angetriebenen Kreiselläufern enthält. In bekannter Weise ist dieser Schwimmer (2) mit Elektrodenflächen (3, 4) an seinen Polen und mit einem Leitband (5) am Äquator versehen. Er schwimmt in einem flüssigen Elektrolyten (6), der enge Spalten zwischen den am Schwimmer (2) angeordneten Elektrodenflächen (3, 4, 7, 8) ausfüllt, wobei letztere Elektrodenflächen (7, 8) an einer den Schwimmer (2) umgebenden Hülle (9) angeordnet sind. Bei dem in Figur 1 gezeigten Ausführungsbeispiel besteht diese Hülle (9) aus einem unteren, ungefähr halbkugeligen Teil (9a) und einem hierzu gleichachsigen oberen kalottenförmigen Teil (9b). Beide Teile (9a, 9b) der Hülle (9) sind innen an einem kugelförmigen Gehäuse befestigt, das mit dem Elektrolyten (6) gefüllt ist. Die komplette Baugruppe ist um die Hochachse (13) drehbar gelagert und mit einem Kugelgelenklager (10, 10a) zur Entkopplung von Roll- und Stampfbewegungen (Pendelgelenk) versehen.

Das Nachführmoment wird durch einen drehsteifen, angular weichen Balg (19) übertragen. Der durch die Elektrodenflächen (3, 4) am Schwimmer (2) und die Elektrodenflächen (7, 8) an der Hülle (9) fließende Strom steuert in an sich bekannter Weise einen am Traggestell (12) angeordneten Nachlaufmotor (14), der das Gehäuse (9) dem Schwimmer (2) um die Hochachse herum nachlaufen läßt. Dabei wird durch die beiden Wendekontakte (15, 16) das Leitband (5) abgegriffen und die so erhaltenen Signale in einer Brückenschaltung (in der Figur nicht dargestellt) verglichen. Ergibt sich durch die Drehung des Schwimmers (2) ein Signal an der Brückenschaltung, so dreht der Motor (14) die beiden Wendekontakte (15, 16) in der Hülle (9) so lange, bis die Brückenschaltung kein Signal mehr liefert (entspricht DE-C 1.473.891).

Bei einer Kursveränderung behält der kugelförmige Schwimmer (2) seine räumliche Lage bei. Die an der Hülle (9) angebrachten Wendekontakte (15, 16) werden über den Motor (14), z.B. mittels eines Getriebes (17, 18) mit Riemen (18) und Scheibe (17), dieser Bewegung des Schwimmers (2) nachgeführt. Über die Brückenschaltung sind diese beiden Wendekontakte (15, 16) elektrisch miteinander verbunden. Wenn das Ausgangssignal der Brückenschaltung Null ist, stoppt der Elektromotor (14). Der Motor (14) kann dabei ein Schritt- oder auch Gleichstrommotor sein. Auf diese Art und Weise wird die Bewegung des Schwimmers (2) auf die Hülle (9) übertragen. Die Hülle (9) wiederum ist mit einem elastischen Balg (19) direkt mit der Antriebsscheibe (17) verbunden. Aus der Mitte der Antriebsscheibe (17) ragt eine Achse (20) nach oben, an deren oberen Ende des Verlängerungsrohres (20) sich eine Abtastscheibe (21) befindet. Die Abtastscheibe (21) (z.B. Codierscheibe mit Gray-Code) wird in geeigneter Weise (z.B. elektro-optisch, induktiv, kapazitiv) abgetastet.

An der Unterseite der Achse (20) befindet sich ein Kugelgelenklager. Diese Aufhängung und Befestigung der Hüllkugelbaugruppe (9) mit den Wendekontakten (15, 16) ist im Detail beschrieben in der DE-C 3011727. Dadurch wird eine sehr hohe axiale Steifigkeit zwischen der Abtastscheibe (21) und der Hülle (9) erreicht, welche aber einer Dreh- und Rollbewegung der Hülle (9) einen kaum merklichen (d.h. minimalen) Widerstand entgegensetzt.

Das Prinzip der Auslesung durch einen Absolutwinkelencoder (21, 22a, 22b) (Auflösungsvermögen bei 2¹² bis 2¹⁶) erlaubt eine Absolutwinkelauswertung des Kreiselgerätes (1), welche elektro-optisch, elektromagnetisch, induktiv, kapazitiv, usw. sein kann. Die Signale beinhalten den Absolutwinkel, welcher mittels einer elektrischen Einrichtung (23) , z.B. auf Kreiselperipheriegeräte (25) übertragen werden kann. Dies ist in Fig. 3 dargestellt.

Der in der Figur 1 dargestellt Kreiselkompaß (1) mit Azimuth-Achsauswertung (Kurswinkelermittlung) muß mindestens einen geeigneten hochauflösenden Absolutwinkelencoder (21, 22a, 22b) mit Abtastscheibe (21) (vorzugsweise Gray-Code; elekro-optisch, elektro-magnetisch, kapazitiv oder induktiv) aufweisen (die Absolutwinkelmessung mit den dazugehörigen Skalen auf der Abtastscheibe (21) sind dabei aus dem bekannten Stand der Technik bestens bekannt), welcher an seiner drehbar gelagerten Achse (13) an einem Universalgelenk (10, 10a, 10b) (z.B. bekannt aus der DE-C 30 11 727) zur Entkopplung der Roll- und Stampfbewegungen, bzw. Vibrationen eines Fahrzeuges, vorzugsweise eines Schiffes direkt befestigt ist. Dabei erfolgt somit die Absolutwinkelgewinnung an der 360°-Achse des Kreiselsystems durch direkte Anflanschung des Encoders (21, 22a, 22b) an den Nachführkreis (14, 17).

Unterhalb des Universalgelenkes (10, 10a, 10b) direkt gekoppelt, befindet sich ein in einem Flüssigkeitstraglager (6) (z.B. bekannt aus der DE-PS 14 73 891) zentriertes, berührungsfrei gelagertes Kreiselsystem (2). Das Kreiselsystem (2) wird dabei in geeigneter Weise (Wendekontakte, Leitband, Brückenschaltung, z.B. bekannt aus der DE-PS 14 73 891) abgetastet, wobei die Abtastbaugruppe bei Kursänderungen des Fahrzeuges durch z.B. einen Schrittmotor (14) dem Kreiselsystem nachgeführt wird.

Durch diese Art der direkten Kopplung des Winkelgebers (21) mit der Abtastbaugruppe (15, 16) erfolgt eine Kurswertermittlung, welche sich daduch auszeichnet,
- daß sie keine Übertragungsfehler durch Getriebe (Getriebelose, Zahnteilungsgenauigkeit) enthält, wodurch eine erhebliche Steigerung der Auswertegenauigkeit gegeben ist;
- daß sie ein serielles oder paralleles Ausgangssignal zur Verfügung stellt, welches mit nachgeschalteter Digitalelektronik schnell und kostengünstig Verarbeitet werden kann; und
- daß sie absolut und eindeutig ist (d.h. bei mechanischer Verstellung bzw. nach Spannungsausfall sofort wieder eine fehlerfreie Winkelinformation zur Verfügung stellt).

Somit erhalten die verschiedenen Peripheriegeräte (25) (z.B. Tochterkompasse, Selbststeuer, Radar, Positionsempfänger, usw.) störsichere Signale, bei welchen eine Desynchronisation nicht möglich ist. Die Kursermittlung erfolgt eindeutig und absolut getriebefrei und liefert z.B. nach einem Spannungsausfall, einer mechanischen Verstellung, o.ä. sofort wieder eindeutige Winkelinformationen. Dabei werden die Peripheriegeräte (25) seriell oder parallel eindeutig, absolut angesteuert.

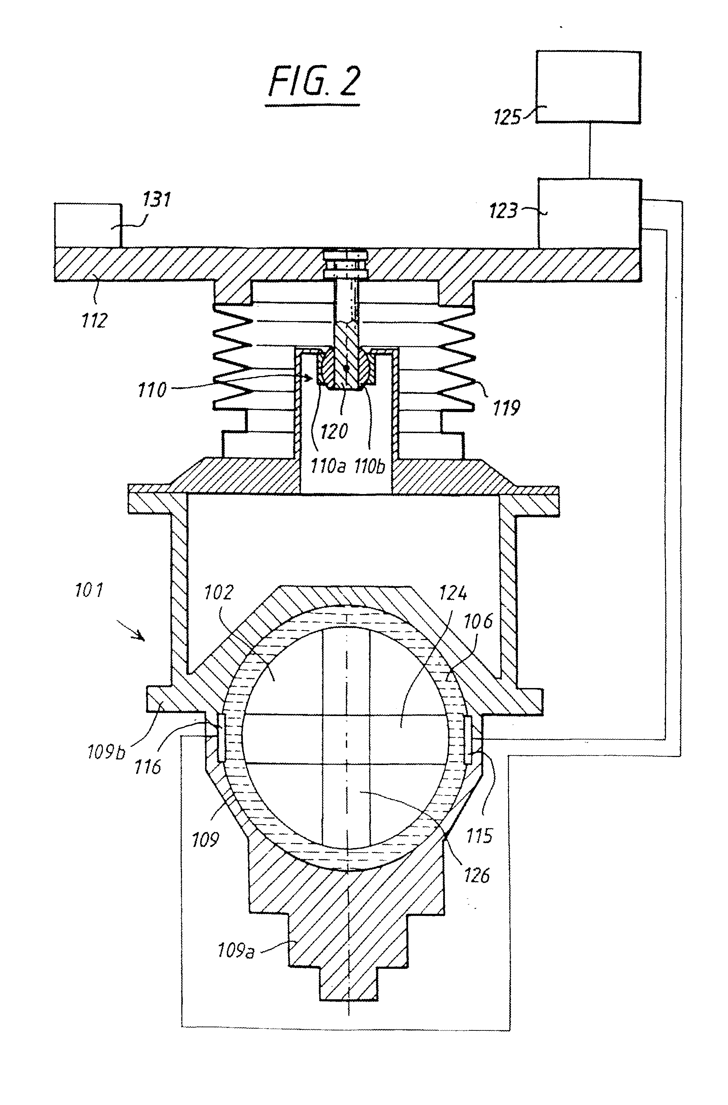

Im Gegensatz zu der in Figur 1 dargestellten Ausgestaltungsform des Erfindungsgedankens sind bei dem in Figur 2 dargestellten Kreiselgerät (101) die Absolutwinkelinformationen direkt auf dem Schwimmer (102) aufgebracht. Der Schwimmer (102) besitzt dazu z.B. zwei Skalen (124, 126), welche in einem Winkel von 90° zueinander angeordnet sind. Vorteilhafter Weise ist dabei eine Skala (124) um den Äquator des Schwimmers (102) angebracht. Die Auslesung der Skalen (124, 126) kann in dieser Anordnung vorzugsweise in absoluter Art mittels CCD-Sensoren (115, 116) und geeigneter vorgeschalteter Optik erfolgen.

Dreht sich der Schwimmer (102), so wird dies durch die Sensoren (115, 116) erfaßt und eine entsprechend der beiden Signale errechnete Winkelinformation ausgegeben. Sind die Sensoren (115, 116) flächig zumindest in horizontaler und vertikaler Richtung über den Umfang der Hülle (109) verteilt, kann auf eine Nachführung verzichtet werden und das ermittelte Signal kann von einer Rechnereinheit (123) zur Erzeugung eines Ausgangssignals verwendet werden, welches an Peripheriegeräte (125) die Absolutwinkelinformation übermittelt. (Die weiteren Bestandteile des Kreiselkompasses sind mit den bereits in der Figur 1 beschriebenen Teilen identisch und tragen lediglich eine um 100 erhöhte Nummerierung.)

Die in Fig.3 dargestellte Datenübertragung der Absolutwinkelinformation kann seriell oder parallel erfolgen. Dabei sollten die Peripheriegeräte (25, 125) die erhaltene Information wieder an die elektronische Übertragungseinrichtung (23, 123) (z.B. Rechnereinheit) zurückmelden um eine einwandfreie Datenübertragung sicherzustellen.

In den Peripheriegeräten (25, 125) können die Absolutwinkel sowohl an einer Analoganzeige (200) wie auch an einer Digitalanzeige (201) angezeigt werden, bzw. auch für weitere Kursermittlungen elektronisch in einem Computer (202) weiterverarbeitet werden.

Durch diese Art der Datenübertragung können die anzeigenden Peripheriegeräte (z.B. Tochterkompasse) (25, 125) selbsteinstellend werden, d.h. nach einem Stromausfall bzw. einer Unterbrechung der Datenübertragung erhalten die Peripheriegeräte (25, 125) sofort wieder eine Information des Absolutwinkels, welcher insbesondere zur Selbsteinstellung einer Analoganzeige (201) verwendet werden kann. Lediglich beim Start des Systems muß die Analoganzeige (201) einmal mit dem Wert der Digitalanzeige (202) in Einklang gebracht werden. Dies kann manuell oder aber auch automatisch erfolgen, wenn die Analoganzeige (201) eine entsprechend auslesbare Markierung besitzt.

Der besondere Vorteil des Systems ist darin zu sehen, daß die Absolutwertgewinnung an der 360°-Achse eines Kreiselsystems (2, 102) durch direkte Anflanschung von Sensoren (115, 116) erfolgt. Dies ermöglicht eine eindeutige, absolute, getriebefreie Kursermittlung, die bei z.B. Spannungsausfall, mechanischer Verstellung usw. sofort wieder eine eindeutige Winkelinformation liefert.

Insbesondere die serielle Datenübertragung an die Peripheriegeräte (25, 125) hat den Vorteil, daß diese eindeutig absolut ansteuerbar sind.

Man erhält eine hochgenaue Kurswinkelermittlung mit wenigen Bauteilen. Das parallele oder serielle Ausgangssignal ist in nachfolgender Digitalelektronik (201, 202) einfach verarbeitbar. Die nach dem bekannten Stand der Technik aufgebauten Sensoren (115, 116) bieten bei direkter Auslesung des Kreiselschwimmers eine übertragungsfehlerfreie, absolute Winkelinformation.

In Kombination mit z.B. drei Achsen (x, y, z) messenden Beschleunigungsmessern (131) an der Basis (112) des Kreiselgerätes läßt sich vom nordorientierten, horizontierten Kreiselschwimmer zusätzlich eine Horizontwinkelinformation (3-achsig) errechnen und an Peripheriegeräte (25, 125) ausgeben.

## Patentansprüche

1. Vorrichtung zur Bestimmung des Kurswinkels eines Fahrzeuges, vorzugsweise eines Schiffes, mit einem Kreiselgerät (1), bestehend aus einem Kreiselsystem (2) und einer das Kreiselsystem umgebenden Hülle (9a, 9b), wobei das Kreiselgerät mit dem Fahrzeug gekoppelt ist,
einem Kreisel-Abtastsystem, bestehend aus einer abtastenden Einrichtung mit Kontakten (15, 16) und aus einer abtastbaren Einrichtung zur Erzeugung von Signalen entsprechend einer winkelmäßigen Relativbewegung zwischen Kreiselsystem und Hülle, die zur Steuerung von anderen Geräten dienen können,
gekennzeichnet durch einem Nachführkreis (14, 17), um die Hülle (9a, 9b) der Bewegung des Kreiselsystems nachzuführen,
wobei der Nachführkreis mit einer Codierscheibe (21) gekoppelt ist, die durch eine elektro-optische, eine elektromagnetische, eine induktive oder eine kapazitive Ausleseeinrichtung (22a, 22b) zur Feststellung des Absolut-Kurswinkels abtastbar ist.

2. Vorrichtung nach Anspruch 1, dadurch gekennzeichnet, daß das Kreiselgerät (1) an einem Universalgelenk (10, 10a) aufgehängt ist, und
einen Schwimmer (2) enthält, der von der gegenüber dem Schwimmer um eine Hochachse (13) um 360° drehbaren Hülle (9a, 9b) umgeben ist.

3. Vorrichtung nach Anspruch 1 oder 2, dadurch gekennzeichnet, daß das Kreiselsystem (2) eine, gegebenenfalls vom Universalgelenk (10, 10a) ausgehende, nach oben durch ein Verlängerungrohr (20) verlängerte Achse (20) besitzt, an deren oberem Ende die Codierscheibe (21) angebracht ist, wobei die verlängerte Achse (20) durch die Mitte einer Antriebsscheibe (17) des Nachführkreises (17, 14) hindurch nach oben ragt und die Codierscheibe (21) direkt an den Nachführkreis (17, 14) angeflanscht ist.

4. Vorrichtung nach einem der Ansprüche 1 bis 3, gekennzeichnet durch eine serielle oder paralle Übertragungseinrichtung (23, 123) für die ermittelten und ausgewerteten Absolutwinkel an andere Geräte.

5. Vorrichtung nach einem der Ansprüche 1 bis 4, gekennzeichnet durch eine Rückmelde-Einrichtung für die an andere Geräte übermittelten Daten der Absolutwinkel-Auslese-Einrichtung an die Absolutwinkel-Auswerteeinrichtung des Kreiselgerätes (1) zur Kontrolle.

6. Vorrichtung nach einem der Ansprüche 1 bis 5, gekennzeichnet durch eine zusätzliche Einrichtung zur Ermittlung des Horizontwinkels des Fahrzeuges.

7. Vorrichtung nach einem der Ansprüche 1 bis 6, gekennzeichnet durch eine Codierscheibe (21) mit Gray-Code.

8. Vorrichtung nach einem der Ansprüche 1 bis 7, dadurch gekennzeichnet, daß die Kreisel-Abtasteinrichtung über eine als biegsame Welle arbeitende Einrichtung direkt mit der drehbaren abtastbaren Einrichtung gekoppelt ist.

9. Vorrichtung nach einem der Ansprüche 1 bis 8, dadurch gekennzeichnet, daß im Kreisel-Abtastsystem eine Brückenschaltung enthalten ist, die bei Relativbewegungen zwischen Kreiselsystem (2) und Hülle (9a, 9b) ein Ausgangssignal erzeugt, das beim Nachführen durch den Nachführkreis (12, 14) auf Null reduzierbar ist.

10. Vorrichtung nach einem der Ansprüche 1 bis 9, dadurch gekennzeichnet, daß auf dem abtastbaren Teil des Kreisel-Abtastsystems mindestens eine für die abtastende Einrichtung lesbare Informationsspur angebracht ist.

11. Vorrichtung nach einem der Ansprüche 1 bis 10, dadurch gekennzeichnet, daß die Signale aus der abtastenden Sensoreinrichtung (22a, 22b; 115, 116) absolute digitale Winkelinformationen darstellen.

12. Vorrichtung nach einem der Ansprüche 1 bis 11, gekennzeichnet durch eine um das Kreiselsystem (2) beweglich angeordnete Abtastbaugruppe, die der Relativbewegung des Kreiselsystems nachführbar ist.

13. Vorrichtung nach Anspruch 12, dadurch gekennzeichnet, daß der Absolutwinkelgeber direkt mit der Abtastgruppe gekoppelt ist.

14. Vorrichtung nach einem der Ansprüche 1 bis 13, dadurch gekennzeichnet, daß das Kreiselgerät ein Kreiselkompaß ist.

15. Vorrichtung nach einem der Ansprüche 1 bis 14, gekennzeichnet durch einen nichtflüchtigen Speicher zur direkten Speicherung der Daten des Absolutwinkelgebers nach der Auslesung.

16. Vorrichtung nach einem der Ansprüche 14 bis 15, dadurch gekennzeichnet, daß auf dem Kreiselsystem (102) zwei senkrecht zueinander ausgerichtete Skalen (124, 126) angebracht sind, welche durch mindestens eine Abtasteinrichtung (115, 116) ausgelesen werden.

17. Vorrichtung nach einem der Ansprüche 1 bis 16, dadurch gekennzeichnet, daß auf dem sich drehenden abgetasteten Teil des Kreiselsystems (102) zwei zueinander senkrecht ausgerichtete Informationsspuren (124, 126) angebracht sind, daß um das abgetastete Teil eine Abtasteinrichtung (115, 116) mit mindestens einem Auslesebaustein angebracht ist, welche gleichzeitig oder nacheinander die Informationsspuren abtastet, und daß die Ausgangssignale digitale Absolutwinkel-Informationen sind.

18. Vorrichtung nach einem der Ansprüche 14 bis 17, dadurch gekennzeichnet, daß der seitlich am Kreiselgerät angeordnete Auslesebaustein ein CCD-Sensor ist.

## Claims

1. A device for the determination of the route angle of a vehicle, preferably of a ship, comprising a gyro compass (1), which consists of a compass system (2) and a casing (9a, 9b) which surrounds the compass system, in which the gyro compass is coupled with the vehicle,
a gyro compass scanning system, consisting of a scanning device with contacts (15, 16) and of a device which can be scanned to generate signals which correspond to an angular relative movement between the compass system and the casing, which can be used for the control of other instruments, characterised by a tracker circuit (14, 17), in order to track the casing (9a, 9b) of the movement of the compass system, in which the tracker circuit is coupled with an encoding disk (21) which can be scanned by an electro-optical, electro-magnetic, inductive or capacitative read out device (22a, 22b) for the determination of the absolute route angle.

2. A device in accordance with claim 1, characterised in that the gyro compass (1) is suspended on a universal joint (10, 10a), and
in that it contains a float (2) which is surrounded by the casing (9a, 9b) and which is rotatable through 360° around a vertical axis (13) against the float.

3. A device in accordance with claims 1 or 2, characterised in that the compass system (2) has an axis (20) which in certain circumstances sets out from the universal joint (10, 10a) and is extended upwardly by an extension tube (20), on the top end of which the encoding disk (21) is attached, whereby the extended axis (20) projects upwardly through the centre of a drive disk (17) of the tracker circuit (17, 14), and the encoding disk (21) is flanged directly on the tracker circuit (17, 14).

4. A device in accordance with one of the claims 1 to 3, characterised by a serial or a parallel transmission device (23, 123) to send the absolute angle which has been detected and evaluated to other instruments.

5. A device in accordance with one of the claims 1 to 4, characterised by a feedback device to send the data from the absolute angle read out device, which were transmitted to other instruments, to the absolute angle evaluation device of the gyro compass (1) for control.

6. A device in accordance with one of the claims 1 to 5, characterised by an additional device for the detection of the horizon angle of the vehicle.

7. A device in accordance with one of the claims 1 to 6, characterised by an encoding disk (21) with Gray code.

8. A device in accordance with one of the claims 1 to 7, characterised in that the compass scanning device is coupled directly with the rotatable device which can be scanned via a device which functions as a flexible shaft.

9. A device in accordance with one of the claims 1 to 8, characterised in that in the compass scanning system, there is a bridge circuit, which on relative movements between the compass system (2) and the casing (9a, 9b), generates an output signal which during tracking by the tracking circuit (12, 14) can be reduced to zero.

10. A device in accordance with one of the claims 1 to 9, characterised in that on the part of the compass scanning system which can be scanned, there is at least one information track which is readable for the scanning device.

11. A device in accordance with one of the claims 1 to 10, characterised in that the signals from the scanning sensor device (22a, 22b; 115, 116) are absolute digital angular information.

12. A device in accordance with one of the claims 1 to 11, characterised by a scanning component group which is arranged to be movable around the compass system (2), which component group can track the relative movement of the compass system.

13. A device in accordance with claim 12, characterised in that the absolute angle sensor is coupled directly with the scanning group.

14. A device in accordance with one of the claims 1 to 13, characterised in that the gyro compass instrument is a gyro-magnetic compass.

15. A device in accordance with one of the claims 1 to 14, characterised by a non-volatile memory for the direct storage of the data from the absolute angle sensor after the read out.

16. A device in accordance with one of the claims 14 to 15, characterised in that on the compass system (102), there are two scales (104, 106) which are aligned perpendicularly to each other and which are read out by at least one scanning device (115, 116).

17. A device in accordance with one of the claims 1 to 16, characterised in that on the rotating part of the compass system (102) which is scanned, there are two information tracks (124, 126) which are aligned perpendicularly to each other, in that around the scanned portion, there is a scanning device (115, 116) which has at least one read out component, which scans simultaneously or successively the information tracks, and in that the output signals are digital absolute angular information.

18. A device in accordance with one of the claims 14 to 17, characterised in that the read out component which is arranged beside the gyro compass is a CCD sensor.

## Revendications

1. Dispositif pour déterminer l'angle de route d'un véhicule, de préférence d'un navire, avec un instrument gyroscopique (1) comprenant un système gyroscopique (2) et une gaine (9a, 9b) entourant le système gyroscopique, l'instrument gyroscopique étant couplé au véhicule,
avec un système de balayage gyroscopique comprenant un organe de balayage avec contacts (15, 16) et un organe à balayer destiné à produire des signaux par rapport à un mouvement relatif angulaire entre le système gyroscopique et la gaine pouvant servir à la commande d'autres instruments,
caractérisé par un cercle de guidage (14, 17) destiné à faire suivre à la gaine (9a, 9b) le mouvement du système gyroscopique, le cercle de guidage étant couplé à un disque codeur (21) qui peut être balayé par un lecteur (22a, 22b) électro-optique, électro-magnétique, inductif ou capacitif dans le but de déterminer l'angle de route absolu.

2. Dispositif selon la revendication 1, caractérisé en ce que l'instrument gyroscopique (1) est suspendu à un joint universel (10, 10a) et
qu'il contient un flotteur (2) entouré d'une gaine (9a, 9b) pouvant être pivotée de 360° autour d'un axe vertical (13) par rapport au flotteur.

3. Dispositif selon la revendication 1 ou 2, caractérisé en ce que le système gyroscopique (2) possède un axe (20) partant éventuellement du joint universel (10, 10a) et rallongé vers le haut par un tube de rallonge (20) à l'extrémité supérieure duquel est disposé le disque codeur (21), l'axe rallongé (20) s'étendant vers le haut en traversant en son centre une poulie de commande (17) du cercle de guidage (17, 14) et le disque codeur (21) étant bridé directement sur le cercle de guidage (17, 14).

4. Dispositif selon l'une des revendications 1 à 3, caractérisé par un organe de transmission (23, 123) en série ou parallèle des angles absolus obtenus et évalués à d'autres instruments.

5. Dispositif selon l'une des revendications 1 à 4, caractérisé par un organe répétiteur pour transmettre les données du lecteur d'angle absolu transmises à d'autres instruments à l'organe d'évaluation d'angle absolu de l'instrument gyroscopique (1) pour qu'il les contrôle.

6. Dispositif selon l'une des revendications 1 à 5, caractérisé par un organe supplémentaire permettant de déterminer l'angle d'horizon du véhicule.

7. Dispositif selon l'une des revendications 1 à 6, caractérisé par un disque codeur (21) avec code-Gray.

8. Dispositif selon l'une des revendications 1 à 7, caractérisé en ce que l'organe de balayage gyroscopique est couplé directement à l'organe à balayer orientable par l'intermédiaire d'un organe faisant fonction d'arbre flexible.

9. Dispositif selon l'une des revendications 1 à 8, caractérisé en ce que un circuit en pont est contenu dans le système de balayage gyroscopique, ledit circuit en pont produisant, au cours de mouvements relatifs entre le système gyroscopique (2) et la gaine (9a, 9b), un signal de sortie pouvant être réduit à zéro lors du guidage ultérieur entrepris par le cercle de guidage (17, 14).

10. Dispositif selon l'une des revendications 1 à 9, caractérisé en ce que au moins une piste d'information lisible par l'organe de balayage est prévue sur la partie à balayer du système de balayage gyroscopique.

11. Dispositif selon l'une des revendications 1 à 10, caractérisé en ce que les signaux provenant de l'organe capteur de balayage (22a, 22b, 115, 116) représentent des informations d'angle digitales absolues.

12. Dispositif selon l'une des revendications 1 à 11, caractérisé par un ensemble de balayage disposé de manière à être mobile autour du système gyroscopique (2) et qui peut être guidé de manière à suivre le mouvement relatif du système gyroscopique.

13. Dispositif selon la revendication 12, caractérisé en ce que l'indicateur de l'angle absolu est couplé directement à l'ensemble de balayage.

14. Dispositif selon l'une des revendications 1 à 13, caractérisé en ce que l'instrument gyroscopique est un compas gyroscopique.

15. Dispositif selon l'une des revendications 1 à 14, caractérisé par une mémoire non-volatile destinée à mémoriser directement après lecture les données de l'indicateur de l'angle absolu.

16. Dispositif selon l'une des revendications 14 à 15, caractérisé en ce que deux échelles (124, 126) sont disposées à angle droit sur le système gyroscopique (102), lesdites échelles étant lues par au moins un organe de balayage (115, 116).

17. Dispositif selon l'une des revendications 1 à 16, caractérisé en ce que, sur la partie tournante balayée du système gyroscopique (102), se trouvent placées deux pistes d'information (124, 126) à angle droit, qu'un organe de balayage (115, 116) avec au moins un module de lecture est prévu autour de la partie balayée, ledit organe de balayage balayant simultanément ou consécutivement les pistes d'information et que les signaux de sortie sont des informations digitales d'angle absolu.

18. Dispositif selon l'une des revendications 14 à 17, caractérisé en ce que le module de lecture disposé sur le côté de l'instrument gyroscopique est un capteur CCD.
